# EUROPEAN PATENT SPECIFICATION

(11) **EP 2 257 413 B1**
(45) Date of publication and mention of the grant of the patent: **18.09.2013**
(21) Application number: 09713605.5
(22) Date of filing: 03.02.2009
(51) Int. Cl.: C14B 5/00, B26D 7/20, B26D 7/26

(54) **MACHINE FOR CUTTING HIDES AND THE LIKE AND SHEET-LIKE MATERIALS IN GENERAL, WITH SIMPLIFIED-ACCESS WORKTABLE**
MASCHINE ZUM SCHNEIDEN VON HÄUTEN UND DERGLEICHEN UND FLÄCHENFÖRMIGE MATERIALIEN IM ALLGEMEINEN MIT ARBEITSTISCH MIT VEREINFACHTEM ZUGRIFF
MACHINE POUR DÉCOUPER DES PEAUX ET ANALOGUES ET DES MATÉRIAUX DE TYPE FEUILLE EN GÉNÉRAL, AVEC UNE TABLE DE COUPE À ACCÈS SIMPLIFIÉ

(30) Priority: 22.02.2008 IT MI20080286
(43) Date of publication of application: 08.12.2010
(73) Proprietor: Comelz S.P.A., 27029 Vigevano (IT)
(72) Inventor: ZORZOLO, Alessandro, I-27029 Vigevano (IT)
(74) Representative: Modiano, Micaela Nadia
(86) International application number: PCT/EP2009/051179
(87) International publication number: WO 2009/103612

(56) References cited:
- WO-A-2008/120096
- DE-A1- 19 715 217
- DE-U1- 20 206 427
- DE-U1-202010 002 246
- GB-A- 2 081 167
- RU-C2- 2 186 660
- US-A1- 2004 099 107

## Description

### Technical Field

The present invention relates to a machine for cutting hides and the like and sheet-like materials in general, with simplified-access cutting table. More particularly, the invention relates to a hide cutting machine with a cutting table adapted to accommodate hides whose dimensions exceed said cutting table in each of the four sides of the cutting table.

### Background Art

As is known, numeric-control cutting machines provided with an X-Y moving carriage and a fixed worktable with suction are currently used to cut hides. These machines have a worktable that is adapted to process hides by successive portions thereof, thus performing the cutting operations successively on limited portions of the hides due to the dimensions of the worktable.

The dimensions of the worktable or cutting area are in fact depending on the characteristics of the bridge cranes and by the need of the operator for visibility during the operation for placement of the hides on the area or worktable.

Substantially, cutting machines with a fixed worktable with suction are divided into single-station machines and oscillating two-station machines.

Whereas in single-station machines the operations of the operator (placement of the hides and unloading thereof) and of the cutting heads are performed sequentially, in the configuration with double oscillating station the operator and the cutting head alternate between the two stations in order to perform the operations in parallel.

The width of each station is adapted to accommodate a statistically significant portion of the hides, as regards the width of the hide, while the depth of the area or worktable of the station is limited by the need for the operator to have visibility for the placement of the hide and therefore can contain only successive portions of the hides that are made to slide sequentially along the longitudinal direction.

Cutting on the hides is performed by a tool carriage, which slides in the direction of the depth of the worktable along a bridge that is moved along the transverse direction, i.e., the direction of the width of the worktable. While the front portion of the bridge runs on a guide arranged along the front transverse side of the worktable, i.e., the width side of the worktable, at the rear the bridge surmounts a containment pocket, which allows to accommodate the portion of hide yet to be worked, rolled up onto itself. This allows to position and work on the worktable or work area hides whose width is comprised within the maximum width of the workstation and whose length is greater than the length of the working field, since the excess portion can be rolled up on itself rolled onto itself and be accommodated in the containment pocket. However, it is not possible to make the excess of hide to protrude at the front due to the presence of the front guide of the bridge crane.

DE 202 06 427 discloses a precision waterjet cutting machine which is for cutting hides, having an arm that moves transversely with respect to a work table and supporting a fixed cutting head.

WO 2008/120096 A1 discloses a machine according to the preamble of claim 1.

The aim of the present invention is to provide a machine for cutting hides and the like and sheet-like materials in general with simplified-access worktable, which allows to work hides whose dimensions exceed the work area in each of the four sides of the worktable or work area.

Within this aim, an object of the present invention is to provide a hide cutting machine with simplified-accessibility worktable that allows to work even exclusively central portions of the hide, with the hide protruding at the front with respect to the worktable, as well as from both sides of said worktable, and to the rear.

Another object of the present invention is to provide a hide cutting machine that is highly reliable, relatively simple to provide and at competitive costs.

This aim, as well as these and other objects that will become better apparent hereinafter, are achieved by a machine for cutting hides and the like and sheet-like material in general, as defined in claim 1.

Further characteristics and advantages of the invention will become better apparent from the description of preferred but not exclusive embodiments of the machine according to the invention, illustrated by way of non-limiting example in the accompanying drawings, wherein:

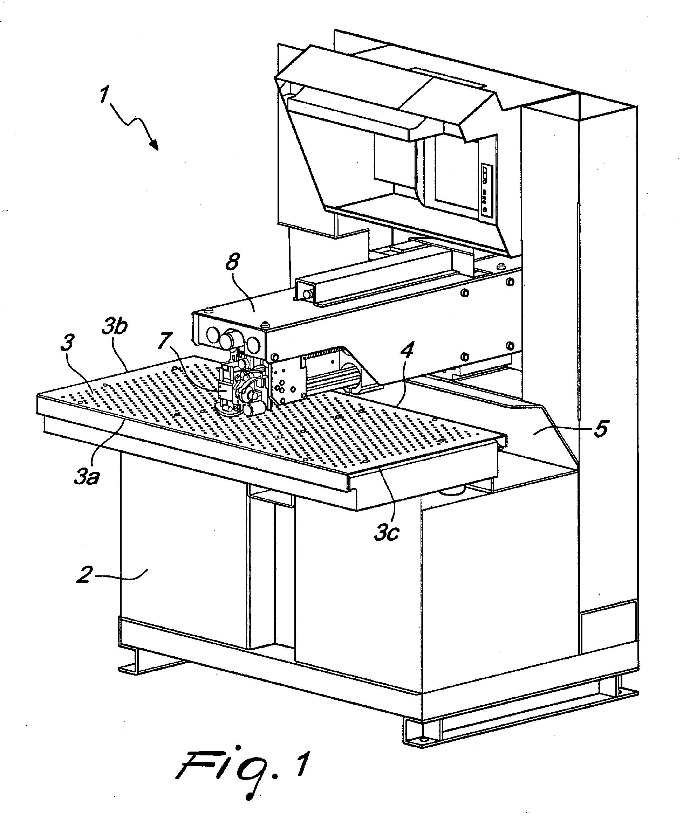

Figure 1 is a perspective view of a hide cutting machine according to the present invention;

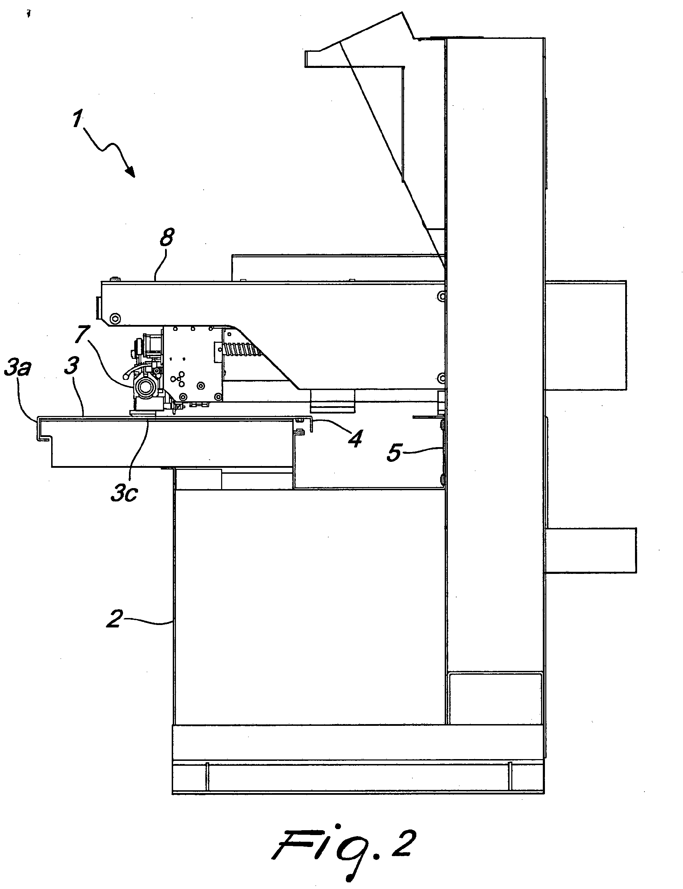

Figure 2 is a side elevation view of the machine;
Figures 3 and 4 are views, in two operating positions, of a solution for moving a portion of the machine according to the invention.

With reference to the figures, the hide cutting machine according to the present invention, generally designated by the reference numeral 1, comprises a supporting footing 2, which is adapted to support a worktable 3, which is conveniently free on three sides, i.e., the long side 3a, which the operator faces, and the corresponding two opposite short sides 3b and 3c.

Substantially, the imaginary extensions of the three sides of the worktable do not encounter obstacles determined by the support and by the actuation of cutting elements, defined hereinafter.

The fourth side of the worktable 3, the side 4, instead faces a pocket 5 for containing the hide being worked, which is rolled up in this pocket in order to be then drawn on to the worktable 3, unrolling it. Therefore, the worktable of the machine according to the invention, differently from the background art, has no obstacles on the imaginary extension of the three sides 3a, 3b and 3c, while the fourth side 4 faces the containment pocket 5.

The machine is provided with cutting elements, conveniently constituted by a cutting head 7 which is supported telescopically at the end of an arm 8 which is fixed in a cantilever manner to the frame of the machine, particularly to the rear portion of the footing of the machine, and cantilevers out on the worktable 3.

According to an example that is not part of the invention, the cutting head can move telescopically along the longitudinal axis of the arm 8, and the arm 8 can rotate about its point of pivoting to the frame or footing 2 of the machine.

In this manner, each position of the cutting head 7 in the worktable 3 or work area, instead of being definable by way of Cartesian X and Y coordinates, can be defined with polar coordinates R, i.e., distance from the fulcrum, and a, i.e., the angular position of the arm 8.

According to the invention, the cutting head 7 can be movable along the longitudinal axis of the arm 8, and such arm can be movable transversely to its longitudinal axis, i.e., parallel to the long side 3 a and 4 of the worktable 3.

Since the rotating arm 8 fixed in a cantilever fashion has a considerable mass and at the same time must be moved with good accelerations that allow an adequate cutting speed, the torque required for such rotating arm must therefore be supplied by a motor that is coupled an element with a large reduction ratio.

Ordinary gear-type reduction units do not meet this goal, and a solution with pulleys and belts would be inadequate due to the lack of rigidity caused by the elasticity of the belt.

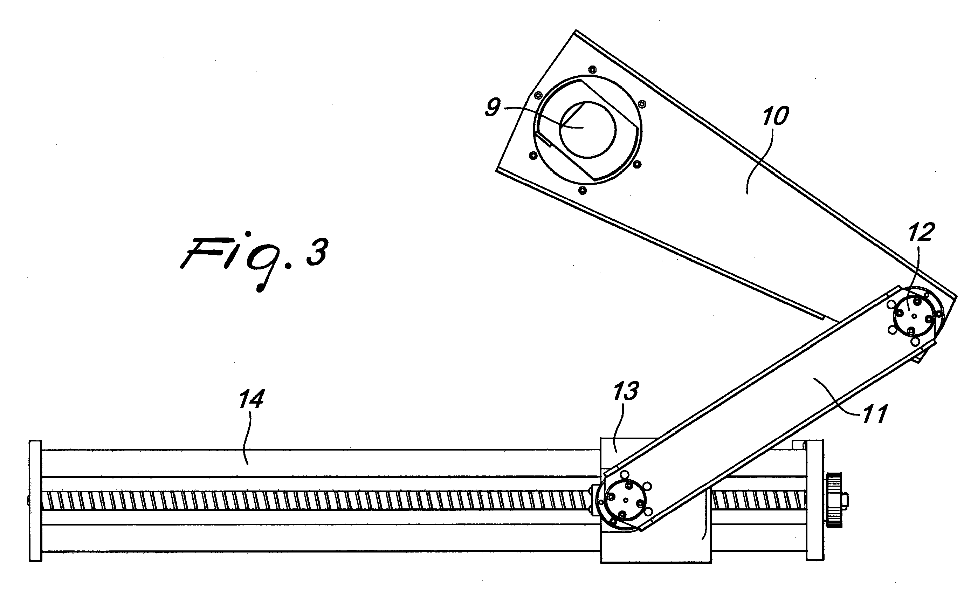

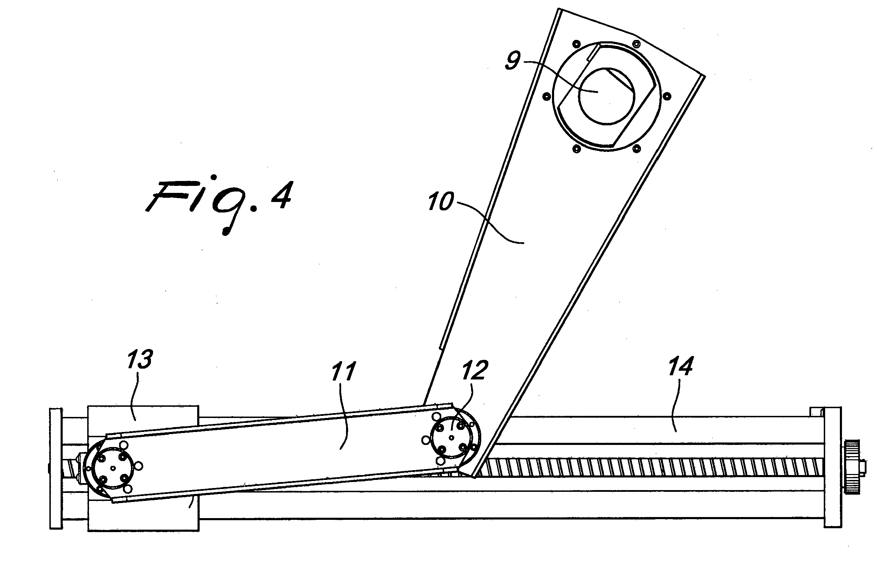

One possible technical solution for rotating the cantilever arm 8, illustrated in Figures 3 and 4, might therefore be to have a system of two levers 10 and 11 which are pivoted to each other at a point 12.

The lever 10 is fixed, at its end that lies opposite the pivoting point 12, to a pivot 9 (which constitutes the pivoting point of the arm 8) of the rotating arm 8, while the lever 11 is pivoted, at its end that lies opposite the pivoting point 12, to a carriage 13 that can move in a linear fashion along a pair of guides 14.

Substantially, the linear movement of the carriage 13 along the guides 14 generates a rotation of the pivot 9 to which the rotating arm 8 is fixed, providing for the movement of the carriage 13 and with a high rigidity of the entire assembly.

The rotating arm 8 is of the telescopic type,

The cutting head 7 can be provided with different cutting means, such as an oscillating blade, a milling cutter, a laser, a water jet and the like.

The machine according to the invention is also provided with means adapted to project onto the worktable the shapes to be cut.

Advantageously, the material to be cut, in the case of use of cutting means constituted by an oscillating blade or milling cutter, is retained on the cutting table 3 by suction.

In practice it has been found that the hide cutting machine according to the present invention fully achieves the intended aim and objects, since it allows to position on the worktable hides of any length and/or width, because said worktable is not limited in its imaginary extensions on three sides, while the fourth side in any case faces the containment pocket that allows to accommodate the excess hide rolled up onto itself.

The machine thus conceived is susceptible of numerous modifications and variations, all of which are within the scope of the appended claims.

## Claims

1. A machine (1) for cutting hides, with simplified-access worktable, comprising a footing (2) for supporting a worktable (3), and cutting elements (7) adapted to be moved on said worktable (3) along the contours of the shapes to be cut, by means of numeric control, **characterized in that** the imaginary extensions of three sides (3a, 3b, 3c) of said worktable (3) do not encounter obstacles due to said cutting elements (7) and their supports, the fourth side (4) of the worktable (3) being surmounted by a cantilever arm (8) that supports said cutting elements (7), said arm (8) being adapted to perform a translational motion parallel to the long sides (3a, 4) of said worktable (3) and supporting a cutting head of the telescopic type, the cutting head moving telescopically along the longitudinal axis of the arm.

2. The machine according to claim 1, **characterized in that** said fourth side (4) of said worktable (3) faces a pocket (5) for containing the hide to be worked.

3. The machine according to claim 1, **characterized in that** said cutting elements (7) comprise said cutting head that can move along the longitudinal axis of said arm (8).

4. The machine according to one or more of the preceding claims, **characterized in that** said worktable (3) is provided with suction means that are adapted to keep stationary thereon the hide or sheet-like material to be worked.

5. The machine according to one or more of the preceding claims, **characterized in that** said cutting head (7) is provided with an oscillating blade.

6. The machine according to one or more of the preceding claims, **characterized in that** said cutting head (7) is provided with a milling cutter.

7. The machine according to one or more of the preceding claims, **characterized in that** said cutting head (7) is provided with a laser.

8. The machine according to one or more of the preceding claims, **characterized in that** said cutting head (7) is adapted to emit a jet of water to perform cutting.

9. The machine according to one or more of the preceding claims, **characterized in that** it comprises means adapted to project onto said worktable the shapes to be cut.

## Patentansprüche

1. Eine Maschine (1) zum Schneiden von Häuten, die mit einem Arbeitstisch mit vereinfachtem Zugriff versehen ist, ein Fußgestell (2) zum Tragen eines Arbeitstisches (3) und Schneidelemente (7) umfassend, die dazu ausgebildet sind, am Arbeitstisch (3) längs der Konturen der zu schneidenden Formen NCgesteuert bewegt zu werden, **dadurch gekennzeichnet, dass** die imaginären Ausdehnungen der drei Seiten (3a, 3b, 3c) des Arbeitstisches (3) keine Hindernisses durch die Schneidelemente (7) und deren Träger erfährt, wobei ein Auslegerarm (8) über die vierte Seite (4) des Arbeitstisches (3) ragt und die Schneidelemente (7) trägt, wobei der Arm (8) dazu ausgebildet ist, eine translatorische Bewegung parallel zu den Längsseiten (3a, 4) des Arbeitstisches (3) durchzuführen und einen teleskopartigen Schneidkopf zu tragen, wobei der Schneidkopf sich teleskopartig entlang der Längsachse des Arms bewegt.

2. Die Maschine gemäß Anspruch 1, **dadurch gekennzeichnet, dass** der vierten Seite (4) des Arbeitstisches (3) eine Ablage (5) zur Aufnahme der zu bearbeitenden Häute gegenüberliegt.

3. Die Maschine gemäß Anspruch 1, **dadurch gekennzeichnet, dass** die Schneidelemente (7) den sich entlang der Längsachse des Arms (8) bewegbaren Schneidkopf umfassen.

4. Die Maschine gemäß einem oder mehreren der vorstehenden Ansprüche, **dadurch gekennzeichnet, dass** der Arbeitstisch (3) mit Saugmitteln ausgestattet ist, die dazu ausgebildet sind, die zu bearbeitenden Häute oder flächenförmigen Materialien darauf festzuhalten.

5. Die Maschine gemäß einem oder mehreren der vorstehenden Ansprüche, **dadurch gekennzeichnet, dass** der Schneidkopf (7) mit einer oszillierenden Klinge ausgestattet ist.

6. Die Maschine gemäß einem oder mehreren der vorstehenden Ansprüche, **dadurch gekennzeichnet, dass** der Schneidkopf (7) mit einem Fräser ausgestattet ist.

7. Die Maschine gemäß einem oder mehreren der vorstehenden Ansprüche, **dadurch gekennzeichnet, dass** der Schneidkopf (7) mit einem Laser ausgestattet ist.

8. Die Maschine gemäß einem oder mehreren der vorstehenden Ansprüche, **dadurch gekennzeichnet, dass** der Schneidkopf (7) dazu ausgebildet ist, durch Austritt eines Wasserstrahls das Schneiden durchzuführen.

9. Die Maschine gemäß einem oder mehreren der vorstehenden Ansprüche, **dadurch gekennzeichnet, dass** sie Mittel umfasst, die dazu ausgebildet sind, die Schnittformen auf den Arbeitstisch zu projizieren.

## Revendications

1. Machine (1) de découpe de peaux, avec une table de travail d'accès simplifié, comprenant un socle (2) permettant de supporter une table de travail (3), et des éléments de coupe (7) adaptés pour être déplacés sur ladite table de travail (3) le long des contours des formes à découper, au moyen d'une commande numérique, **caractérisée en ce que** les extensions imaginaires de trois côtés (3a, 3b, 3c) de ladite table de travail (3) ne rencontrent pas d'obstacles dus aux éléments de coupe (7) et à leurs supports, le quatrième côté (4) de la table de travail (3) étant surmonté par un bras en porte-à-faux (8) qui supporte lesdits éléments de coupe (7), ledit bras (8) étant adapté pour réaliser un mouvement de translation parallèle aux côtés longs (3a, 4) de ladite table de travail (3) et supportant une tête de coupe de type télescopique, la tête de coupe se déplaçant de façon télescopique le long de l'axe longitudinal du bras.

2. Machine selon la revendication 1, **caractérisée en ce que** ledit quatrième côté (4) de ladite table de travail (3) fait face à une poche (5) permettant de contenir la peau à travailler.

3. Machine selon la revendication 1, **caractérisée en ce que** lesdits éléments de coupe (7) comprennent ladite tête de coupe qui peut se déplacer le long de l'axe longitudinal dudit bras (8).

4. Machine selon une ou plusieurs des revendications précédentes, **caractérisée en ce que** ladite table de travail (3) est pourvue de moyens d'aspiration qui sont adaptés pour maintenir la peau ou le matériau de type feuille à travailler stationnairement sur cette dernière.

5. Machine selon une ou plusieurs des revendications précédentes, **caractérisée en ce que** ladite tête de coupe (7) est pourvue d'une lame oscillante.

6. Machine selon une ou plusieurs des revendications précédentes, **caractérisée en ce que** ladite tête de coupe (7) est pourvue d'une fraise.

7. Machine selon une ou plusieurs des revendications précédentes, **caractérisée en ce que** ladite tête de coupe (7) est pourvue d'un laser.

8. Machine selon une ou plusieurs des revendications précédentes, **caractérisée en ce que** ladite tête de coupe (7) est adaptée pour émettre un jet d'eau afin de réaliser la découpe.

9. Machine selon une ou plusieurs des revendications précédentes, **caractérisée en ce qu'**elle comprend un moyen adapté pour projeter sur ladite table de travail les formes à découper.
